(19) Europäisches Patentamt
European Patent Office
Office européen des brevets

(11) **EP 4 716 217 A1**

(12) **EUROPEAN PATENT APPLICATION**

(43) Date of publication:
**25.03.2026 Bulletin 2026/13**

(21) Application number: **25197188.3**

(22) Date of filing: **21.08.2025**

(51) International Patent Classification (IPC):
**H04N 19/59** (2014.01)    **G06N 3/044** (2023.01)
**G06T 9/00** (2006.01)

(52) Cooperative Patent Classification (CPC):
**H04N 19/59; G06N 3/044; G06N 3/045;
G06N 3/0455; G06N 3/0464; G06N 3/047;
G06N 3/048; G06N 3/063; G06N 3/08; G06N 3/084;
G06N 3/088; G06N 3/09; G06T 9/002**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.09.2024  FI 20246139**

(71) Applicant: **Nokia Technologies Oy
02610 Espoo (FI)**

(72) Inventors:
• **RANGU, Goutham**
  **Tampere (FI)**
• **REZAZADEGAN TAVAKOLI, Hamed**
  **Espoo (FI)**

(74) Representative: **Nokia EPO representatives
Nokia Technologies Oy
Karakaari 7
02610 Espoo (FI)**

(54) **A METHOD, AN APPARATUS AND A COMPUTER PROGRAM PRODUCT FOR VIDEO CODING**

(57)    The embodiments relate to an apparatus comprising at least one processor, memory including computer program code, the memory and the computer program code configured to, with the at least one processor, cause the apparatus to perform at least the following: receive data concerning a frame or a patch; generate an intermediate tensor based on the received data by a first instance of a neural network block; upsample the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

Fig. 6

## Description

Technical Field

The present solution generally relates to video coding. In particular, the present solution relates to neural video coding.

Background

In a video coding system, a video codec comprises an encoder and a decoder. Recently neural networks have been used in the context of image and video compression. Currently new developments in deep learning have been achieved. In this respect, for example, the concept of implicit neural representation (INR) offers a mechanism to process and represent visual data.

Summary

The present embodiments provide an improved solution for implicit neural representation of time-varying signals.

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for receiving data concerning a frame or a patch; means for generating an intermediate tensor based on the received data by a first instance of a neural network block; means for upsampling the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

According to a second aspect, there is provided a method comprising: receiving data concerning a frame or a patch; generating an intermediate tensor based on the received data by a first instance of a neural network block; upsampling the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

According to a third aspect, there is provided an apparatus comprising at least one processor, memory including computer program code, the memory and the computer program code configured to, with the at least one processor, cause the apparatus to perform at least the following: receive data concerning a frame or a patch; generate an intermediate tensor based on the received data by a first instance of a neural network block; upsample the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

According to a fourth aspect, there is provided computer program product comprising computer program code configured to, when executed on at least one processor, cause an apparatus or a system to: receive data concerning a frame or a patch; generate an intermediate tensor based on the received data by a first instance of a neural network block; upsample the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

According to an embodiment, wherein the recurrent neural network blocks appear on a same level.

According to an embodiment, wherein the recurrent neural network blocks are on different subsequent levels.

According to an embodiment, wherein each of said first instance and at least one second instance of the neural network blocks are on different subsequent levels.

According to an embodiment, the number of subsequent levels is at least one.

According to an embodiment, the auxiliary information comprises at least weights of the neural network block of a current level or the previous level.

According to an embodiment, the auxiliary information comprises a residual latent tensor that is learned for a specific level. In an alternative embodiment, the learned residual may be generic to any specific level or is obtained from a generic neural video codec.

According to an embodiment, the auxiliary information comprises encoded relative positional information across levels after upsampling, e.g., the coordinates of the patch in frame or time compared to a reference frame or patch.

According to an embodiment, the received data comprises spatial information and/or temporal information of a patch or a frame, e.g., coordinates of the patch in frame or time.

According to an embodiment, the upsampling is any of known techniques, e.g., bilinear, or trilinear. Alternatively, the upsampling may follow a learning-based approach, that is, function defined as a neural network that maps an input to a bigger size, e.g., the output dimension is X times the input dimension, where X >= 1 from domain of real numbers.

According to an embodiment, a neural network block is convolutional neural network or a multilayer perceptron algorithm or a combination of both.

According to an embodiment, the computer program product is embodied on a non-transitory computer readable medium.

Description of the Drawings

In the following, various embodiments will be described in more detail with reference to the appended drawings, in which

Fig. 1     shows an example of a conventional encoding process;

Fig. 2     shows an example of a conventional decoding process;

Fig. 3     shows an example of a conventional neural video coding system;

Fig. 4     shows an example of a recursive neural network;

Fig. 5     shows an example of frames comprising patches;

Fig. 6     shows an example of a reconstruction of a frame or a patch recursively at three levels;

Fig. 7     shows an example of a reconstruction of a frame or a patch recursively at some levels;

Fig. 8     shows an example of a reconstruction of a frame or a patch recursively at some levels and also at the same level;

Fig. 9     shows an example of a reconstruction of a frame or a patch recursively at same levels;

Fig. 10    illustrates a table on a proof of concept;

Fig. 11    is a flowchart illustrating a method according to an embodiment; and

Fig. 12    shows an apparatus according to an embodiment.

Description of Example Embodiments

The present embodiments relate to recursive neural architecture for implicit representation of time-varying signals.

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

A video codec comprises an encoder and a decoder. The encoder transforms the input video into a compressed representation suited for storage/transmission. The decoder can uncompress the compressed video representation back into a viewable form. The encoder may discard some information in the original video sequence in order to represent the video in a more compact form (i.e., at lower bitrate).

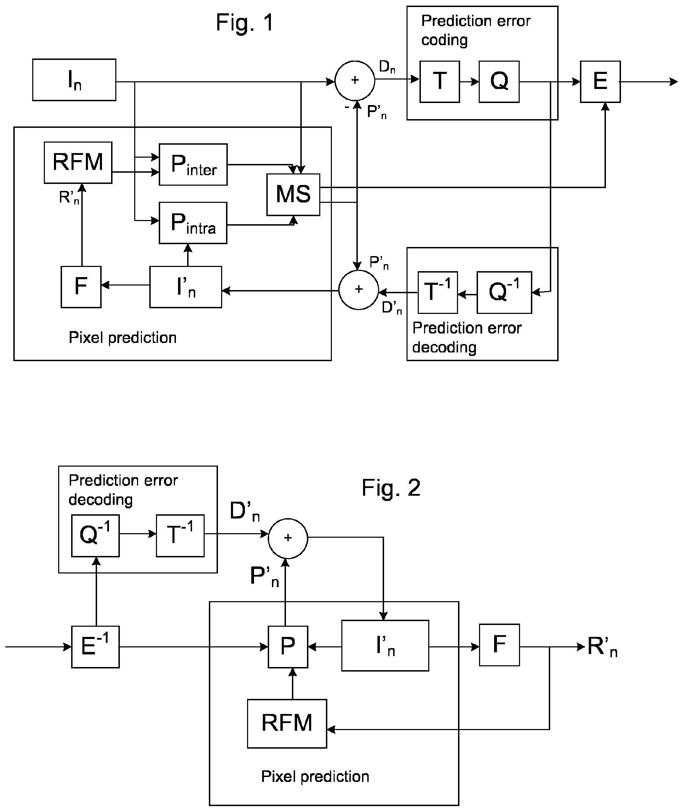

An example of a conventional encoding process is illustrated in Figure 1. Figure 1 illustrates an image to be encoded ($I_n$); a predicted representation of an image block ($P'_n$); a prediction error signal ($D_n$); a reconstructed prediction error signal ($D'_n$); a preliminary reconstructed image ($I'_n$); a final reconstructed image ($R'_n$); a transform (T) and inverse transform ($T^{-1}$); a quantization (Q) and inverse quantization ($Q^{-1}$); entropy encoding (E); a reference frame memory (RFM); inter prediction ($P_{inter}$); intra prediction ($P_{intra}$); mode selection (MS) and filtering (F).

Figure 2 illustrates a conventional decoding process. Figure 2 shows a predicted representation of an image block ($P'_n$); a reconstructed prediction error signal ($D'_n$); a preliminary reconstructed image ($I'_n$); a final reconstructed image ($R'_n$); an inverse transform ($T^{-1}$); an inverse quantization ($Q^{-1}$); an entropy decoding ($E^{-1}$); a reference frame memory (RFM); a prediction (either inter or intra) (P); and filtering (F).

Recently, neural networks (NNs) have been used in the context of image and video compression. In the context of machine learning, a neural network is a computation graph consisting of several layers (also referred to as "levels") of computation. Each layer consists of one or more units, where each unit performs an elementary computation. A unit is connected to one or more other units, and the connection may have associated with a weight. The weight may be used for scaling the signal passing through the associated connection. Weights are learnable parameters, i.e., values which can be learned from training data. There may be other learnable parameters, such as those of batch-normalization layers.

Two widely used architectures for neural networks are feed-forward and recurrent architectures. Feed-forward neural networks are such that there is no feedback loop: each layer takes input from one or more of the layers before and provides its output as the input for one or more of the subsequent layers. Also, units inside a certain layer take input from units in one or more of preceding layers and provide output to one or more of following layers. Examples of such are Multilayer Perceptrons (MLP) and Convolutional Neural Networks (CNN). Recurrent neural network (RNN) uses sequential data feeding. The input of RNN consists of the current input and the previous samples. Therefore, the connections between nodes form a graph along a temporal sequence.

One of the important properties of neural networks (and other machine learning tools) is that they are able to learn properties from input data, either in supervised way or in unsupervised way. Such learning is a result of a training algorithm, or of a meta-level neural network providing the training signal.

In general, the training algorithm consists of changing some of the properties of the neural network so that its output is as close as possible to a desired output. For example, in the case of classification of objects in images, the output of the neural network can be used to derive a class or category index which indicates the class or category that the object in the input image belongs to. Training usually happens by minimizing or decreasing the output's error, also referred to as the loss. Examples of losses are mean squared error, cross-entropy, etc. In recent deep learning techniques, training is an iterative process, where at each iteration the algorithm modifies the weights of the neural net to make a gradual improvement of the network's output, i.e., to gradually decrease the loss.

Lately, neural networks have been used for compressing and de-compressing data such as images, i.e., in an image codec. The most widely used architecture for realizing one component of an image codec is the auto-encoder, which is a neural network consisting of two parts: a neural encoder and a neural decoder. The neural encoder takes as input an image and produces a code which requires less bits than the input image. This code may be obtained by applying a binarization or quantization process to the output of the encoder. The neural decoder takes in this code and reconstructs the image which was input to the neural encoder.

Such neural encoder and neural decoder may be trained to minimize a combination of bitrate and distortion, where the distortion may be based on one or more of the following metrics: Mean Squared Error (MSE), Peak Signal-to-Noise Ratio (PSNR), Structural Similarity Index Measure (SSIM), or similar. These distortion metrics are meant to be correlated to the human visual perception quality, so that minimizing or maximizing one or more of these distortion metrics results into improving the visual quality of the decoded image as perceived by humans.

Neural networks may thus be used to replace one or more of the components of a traditional codec. These components may include additional in-loop filter, single in-loop filter, intra-frame prediction, inter-frame prediction, transform and/or inverse transform, probability model for an arithmetic codec, etc. As another example, the neural networks may be used as the main components of the image/video codecs. This can be implemented by re-using the video coding pipeline but replacing most or all the components with neural networks. Alternatively, the whole video coding pipeline may be re-designed.

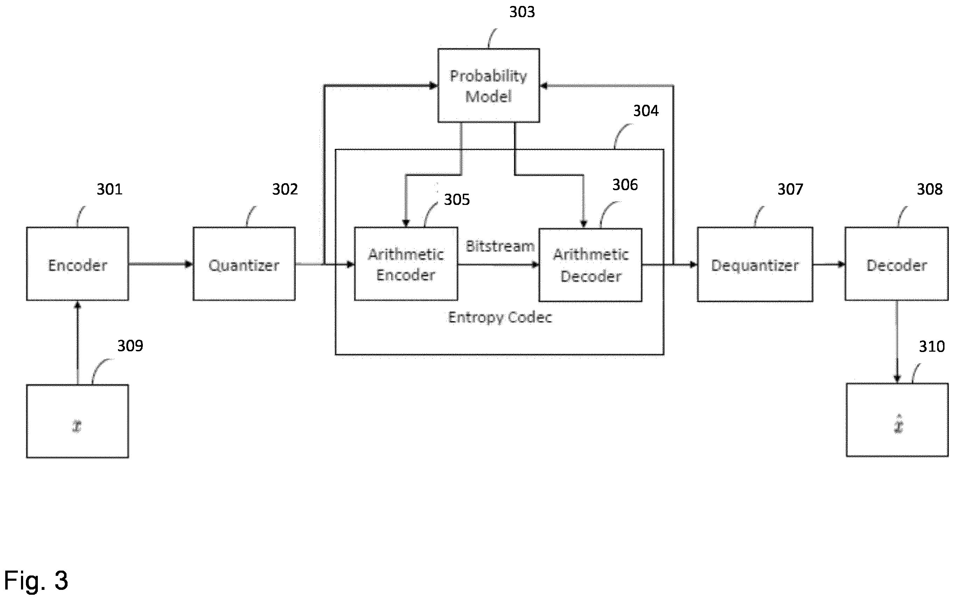

Figure 3 illustrates an example of a conventional neural network-based end- to-end learned video coding system. Such a system may contain an encoder 301, a quantizer 302, a probability model 303, an entropy codec 304 (for example arithmetic encoder 305 and arithmetic decoder 306), a dequantizer 307 and a decoder 308. The encoder 301 and decoder 308 may be two neural networks or comprise neural network components. The probability model 303 may also comprise neural network components. Quantizer 302, dequantizer 307 and entropy codec 304 may not be based on neural network components, but they may also comprise neural network components, potentially.

On encoder side, the encoder component 301 takes a video x 309 as input and converts the video from its original signal space into a latent representation that may comprise a more compressible representation of the input. In the case of an input image, the latent representation may be a 3-dimensional tensor, where two dimensions represent the vertical and horizontal spatial dimensions, and the third dimension represent the "channels" which contain information at that specific location.

The quantizer component 302 quantizes the latent representation into discrete values given a predefined set of quantization levels. Probability model 303 and arithmetic codec component 305, 306 work together to perform lossless compression for the quantized latent representation and generate bitstreams to be sent to the decoder side. Given a symbol to be encoded into the bitstream, the probability model 303 estimates the probability distribution of all possible values for that symbol based on a context that is constructed from available information at the current encoding/decoding state, such as the data that has already been encoded/decoded. Then, the arithmetic encoder 305 encodes the input symbols to bitstream using the estimated probability distributions.

On the decoder side, opposite operations are performed. The arithmetic decoder 306 and the probability model 303 first decode symbols from the bitstream to recover the quantized latent representation. Then the dequantizer 307 reconstructs the latent representation in continuous values and pass it to decoder 308 to recover the input video/image. Note that the probability model 303 in this system is shared between the encoding and decoding systems. In practice, this means that a copy of the probability model 303 is used at encoder side, and another exact copy is used at decoder side.

In this system, the encoder 301, probability model 303, and decoder 307 may be based on deep neural networks. The system may be trained in an end-to-end manner by minimizing the following rate-distortion loss function:

$$L = D + \lambda R,$$

where D is the distortion loss term, R is the rate loss term, and $\lambda$ is the weight that controls the balance between the two losses. The distortion loss term may be the mean square error (MSE), structure similarity (SSIM) or other metrics that evaluate the quality of the reconstructed video. Multiple distortion losses may be used and integrated into D, such as a weighted sum of MSE and SSIM. The rate loss term is normally the estimated entropy of the quantized latent representation, which indicates the number of bits necessary to represent the encoded symbols, for example, bits-per-pixel (bpp).

For lossless video/image compression, the system may contain only the probability model 303 and arithmetic encoder/decoder 305, 306. The system loss function contains only the rate loss, since the distortion loss is always zero (i.e., no loss of information).

Currently, new developments in deep learning have been achieved. One of those is implicit neural representation (INR) offering a new mechanism for processing an representing visual data.

Implicit Neural Representation (INR) represents the multimedia content in terms of a neural network. The INR is used to replace the latent representation in the conventional process, so that the decoder is not needed since the receiver can directly consume the neural network to generate video. Implicit Neural Representations typically learn a coordinate to value mapping, that is mapping a pixel or voxel index to its color and/or occupancy to support implicit reconstruction of the original signal. The approach of INR is to represent video in terms of a neural network.

INR has been discussed in several publications. For example, Hao Chen et. al "NeRV: Neural Representations for Video" (26 October 2021) discloses implicit neural representations for video (NeRV) and proposes to represent a complete video frame as a neural network. Whereas the former solutions have treated videos as frame sequences, in NeRV, frame index and/or positional index is taken as an input, whereupon the output is a reconstructed corresponding video frame or a RGB (Red, Green, Blue) image. To put is short, the video encoding in NeRV is fitting a neural network to video frames, and the decoding process is a feedforward operation. That is given a time index, the neural network generates a complete video frame corresponding to this time index.

Another publication from Hao Chen et. al "HNeRV: A Hybrid Neural Representation for Videos" (June 2023) advances the technique by combining the concept of NeRV with a neural video codec. It results in a small content adaptive neural network representation that is adapted to the frames and overfitted to the video frames.

A publication by Ho Man Kwan et al. "HiNeRV: Video Compression with Hierarchical Encoding-based Neural Representation" (16 June, 2023) follows the NeRV solution by using time index. This disclosure suggests splitting the frame into patches in terms of a grid, and providing the location of the patch in the grid as well as the time index, i.e., (x, y, t) where x, y encodes positional location of the patches. This results on 38.7% improvement over x265 in very slow configuration outperforming all the other high-performing INR video codecs.

Implicit neural representations represent data using parameters of a neural network. By learning an approximate function, the neural network is able to map a representation, for example a latent tensor, to the time varying signal. Compression of such time varying signals can be seen as the compression of a neural network by quantization and pruning, and/or by defining lightweight but complex neural architectures that can capture such time varying signals with less parameters. Defining a light-weight neural architecture for implicit neural representations is a difficult task and it is a crucial step in improving the compression ratio of such models.

Since there is a compromise between the number of parameters and the quality of the produced signal when using INR, the purpose of the present solution is to find a way to balance computation, memory requirements and quality. This is achieved by a recursive neural architecture for implicit representation of time-varying signals. In such solution, data concerning a frame or a patch is processed by the neural network block to generate an intermediate tensor. The intermediate tensor is progressively upsampled in one or more levels to result in a reconstructed frame or patch. Term "level" can be interchangeable referred to as a layer of a neural network, which is a collection of nodes operating together to achieve a desired outcome, such as an intermediate tensor in the present embodiments.

In the following, a neural architecture and its decoding process for improved implicit representation of time-varying signals are defined. The proposed solution defines the process of creating multimedia from at least one latent tensor and at least one neural network. The solution according to present embodiments demonstrates the usage of recursive neural architecture, a method, and its usage to exploit subsequent generation of intermediate tensors with increased spatial resolution using convolutional and/or multi-layer perceptron architecture for compactly representing a two-dimensional (2D) video. The neural network may receive at least spatial information and/or temporal information, or a mixture of space-time information, for generating a time varying multimedia content such as video or a four-dimensional (4D) representation of a scene. The spatial information may be in the format of positional encoding on a grid. The temporal information can be a time-index.

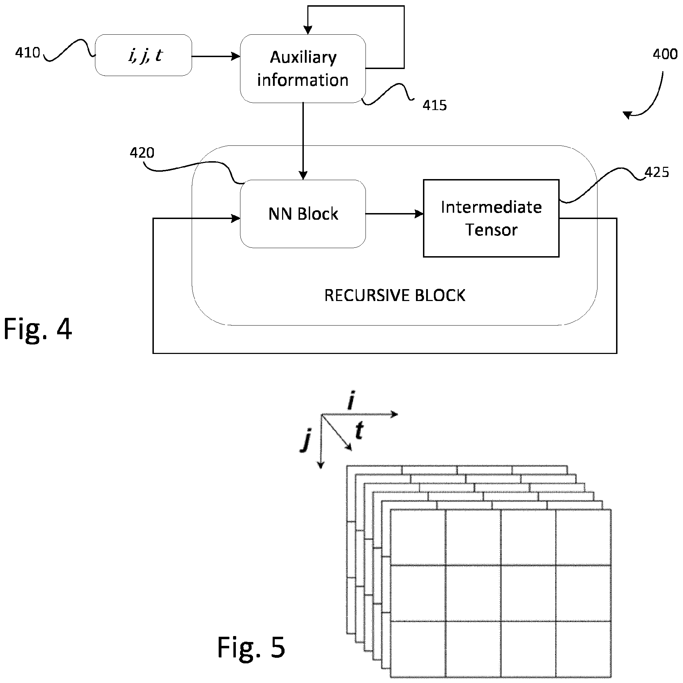

Figure 4 illustrates an example of a recursive neural network 400. The recursive block comprises a neural network block 420. The neural network block can be considered to be a single layer of units, or multiple layers of units, or a complete neural network model. The neural network block 420 receives the input comprising a patch 410 (or a frame) and auxiliary information 415. The neural network block 420 processes the input data to generate an intermediate tensor 425. Figure 5 illustrates an example of frames. Each individual frame of a video from [0, T] is indicated with "t" and such frame can be split into subframes (or patches), where (i, j) indicate such patch in a frame.

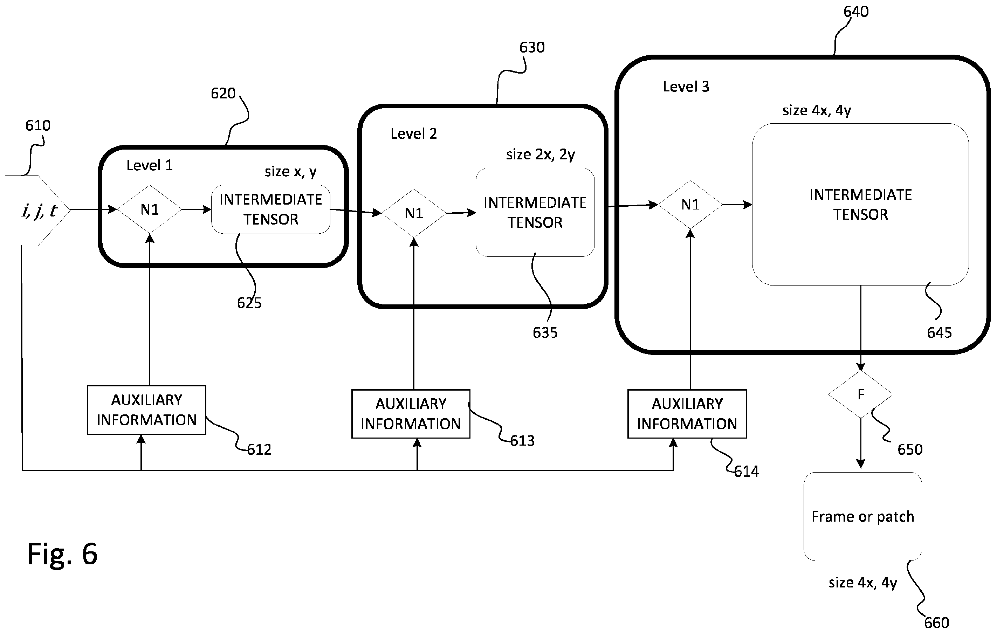

Figure 6 shows an example, where a frame (t) or a patch from the (i, j, t) 660 is reconstructed/generated by progressively up-sampling and processing the intermediate tensor 625, 635, 645. In the example of Figure 6 reconstructing a frame or a patch occurs in three levels 620, 630, 640. Each level comprises a neural network block N1, which means that the same neural network block is recursively used at all levels 620, 630, 640 of construction. This kind of a recurrence can be referred to as "inter level recurrence" and shortly referred to as "model M1" later in this description.

The neural network block on the first level 620 receives an input 610. The input 610 can be a latent tensor corresponding to the frame or the patch index, or the input 610 can be the frame or patch index itself. In addition, the neural network block on the first level 620 receives auxiliary information 612. On the first level 629, the neural network block produces an intermediate tensor 625 based on the input 610 and the auxiliary information 612. The resulted intermediate tensor 625 provided to the neural network block on the second level 630 which receives also auxiliary information 613. The intermediate tensor 625 from the previous level is upsampled by the neural network block on the second level 630 using the auxiliary information 613, thus producing an upsampled intermediate tensor 635. This upsampled intermediate tensor 635 is further upsampled by the neural network block on the third level 640 producing an upsampled intermediate tensor 645.

At each level, the spatial dimension of the intermediate tensor is the same. At the first level 620 the spatial dimension is (x, y) and at the second level 630 the spatial dimension is (2x, 2y) and at the third level 940 the spatial dimension is (4x, 4y). The up-sampling in this embodiment is bi-linear, which means that the spatial dimension of the subsequent level is double that of the current level. It is appreciated that the bi-linear upsampling is an example, and other type of upsampling may be used instead. As examples of other types of upsampling methods the following are provided: Nearest neighbor, where existing pixels are duplicated; Bed of nails technique, where only one input element is input in each region, while others are zero; Max unpooling; Bicubic interpolation, where 16 neighboring pixels are used to compute a value of new pixels; Lanczos interpolation, where weighted average of a larger number of neighboring pixels is used to compute the value of new pixels;

trilinear interpolation, where a value of a function at an intermediate point is approximated .

Each of the neural network blocks on each level 620, 630, 640 also receives as input auxiliary information 612, 613, 614 respectively, wherein the auxiliary information is used in upsampling. Auxiliary information can define the weights to be used at a corresponding level. In addition, the auxiliary information can define which weights are re-used at a corresponding level. In addition, or instead, the auxiliary information can include a residual latent tensor that is learned for a specific level. In addition, or instead, the auxiliary information can include encoded relative positional information across levels after upsampling, for example, coordinates of the patch in frame or time or a vectorial representation, for instance, obtained from a neural network, that is indicating such positional information.

After the last level of the upsampling, the resulted intermediate tensor 645 is filtered 650 to obtain the reconstructed frame or the patch 660.

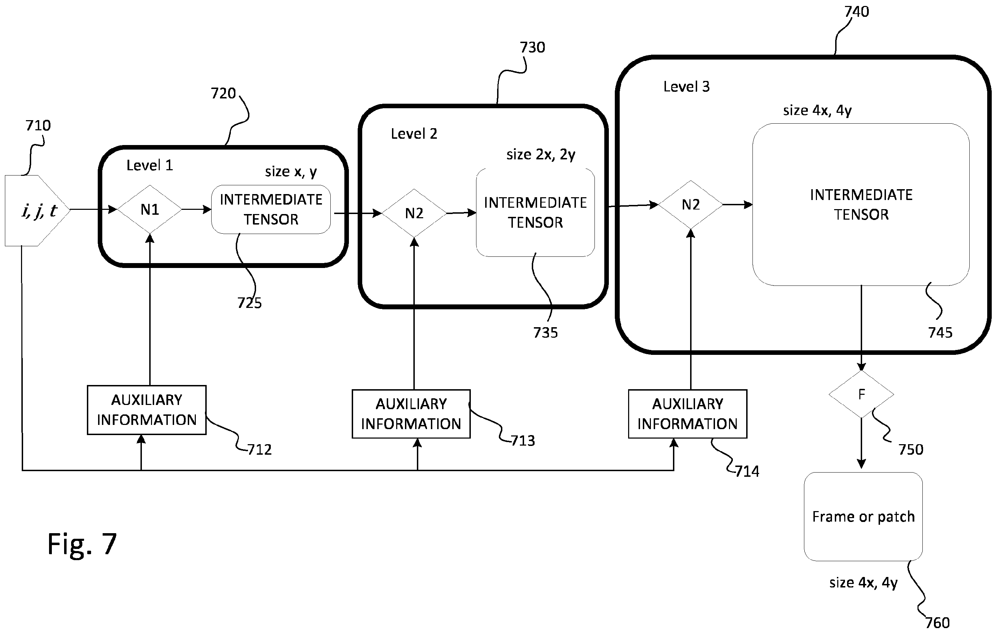

Figure 7 illustrates an example resembling the one shown in Figure 6 with an exception that the recurrence occurs at the second level 730 and at the third level 740. This means that the neural network block N2 is shared only between the second and the third levels 730, 740, and is separate from the weights of the neural network block N1 at the first level 720. This kind of recurrence is referred to as "inter-level recurrence" and shortly as "model M2". The architecture of neural network block N1 and neural network block N2 can be different. For example, the neural network block N1 can be convolutional and neural network block N2 can be MLP.

Otherwise, the process follows the one of Figure 6. The frame (t) or a patch from the (i, j, t) 760 is reconstructed/generated by progressively upsampling and processing the intermediate tensor 725, 735, 745. In this example, the frame or the patch is reconstructed in three levels 720, 730, 740.

The neural network block N1 on the first level 720 receives an input 710. the input 710 can be a latent tensor corresponding to the frame or the patch index, or the input 710 can be the frame or patch index itself. The neural network block produces an intermediate tensor 725 based on the input 710. This intermediate tensor 725 is upsampled by the neural network block N2 on the second level 730 using auxiliary information 713 and producing an upsampled intermediate tensor 735. This is further upsampled by the neural network block N2 on the third level 740 using auxiliary information 714 and producing an upsampled intermediate tensor 745. At each level, the spatial dimension of the intermediate tensor is the same. At the first level 720 the spatial dimension is (x, y) and at the second level 730 the spatial dimension is (2x, 2y) and at the third level 740 the spatial dimension is (4x, 4y).

Neural network block of each level 720, 730, 740 also receives as input auxiliary information 712, 713, 714 respectively, wherein the auxiliary information is used in upsampling. Auxiliary information can define the weights to be used at a corresponding level. In addition, the auxiliary information can define which weights are re-used at a corresponding level. In addition, or instead, the auxiliary information can include a residual latent tensor that is learned for a specific level. In addition, or instead, the auxiliary information can include encoded relative positional information across levels after upsampling.

After the last level of the upsampling, the resulted intermediate tensor 745 is filtered 750 to obtain the reconstructed frame or the patch 760.

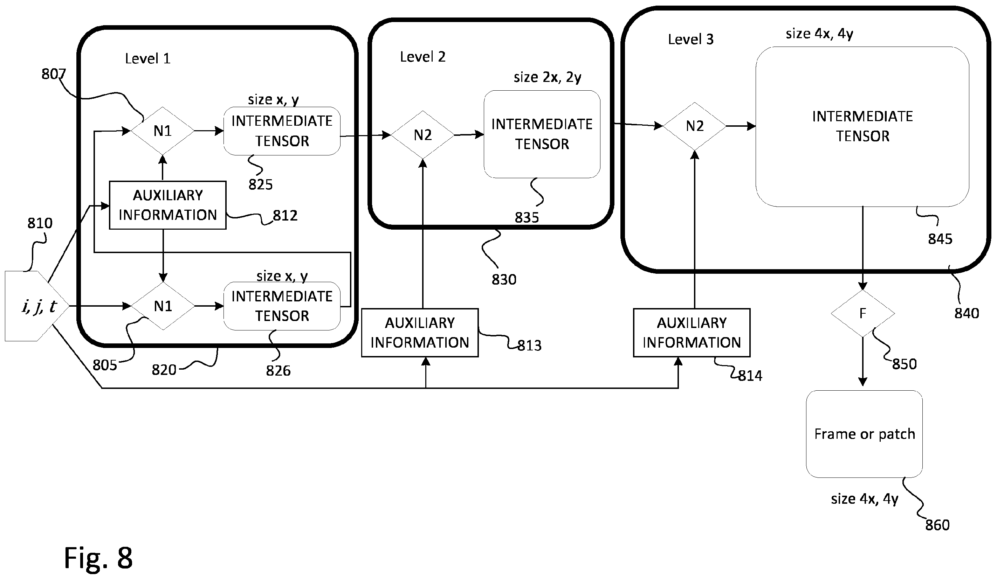

Figure 8 illustrates a further example on recursion also at the same level. "Also" in this example means that there is recursion between the second and the third levels 830, 840 (inter level recurrence) using neural network block 2, but also within the first level 820 (intra level recurrence) using neural network block 1. This model is referred to as "model M3". It is appreciated that Figure 8 illustrates an example configuration having intra level recurrence at the first level 820. However, the intra level recurrence can appear in other levels as well or instead. For example, intra level recurrence can appear in the third level, wherein the inter level recurrence is at the first and the second levels. Any combination is thus possible. The architectures of neural network blocks that have no recurrence, can be different. For example, in the example of Figure 8, the neural network block N1 can be convolutional and neural network block N2 can be MLP.

Otherwise, the process follows the ones of Figures 6 and 7. The frame (t) or a patch from the (i, j, t) 860 is reconstructed/generated by progressively up-sampling and processing the intermediate tensor 825, 835, 845. In this example, the frame or the patch is reconstructed in three levels 820, 830, 840.

The first instance 805 of the neural network block N1 on the first level 820 receives an input 810. The input 810 can be a latent tensor corresponding to the frame or the patch index, or the input 810 can be the frame or patch index itself. In addition, the first instance 805 of the neural network block N1 receives auxiliary information 812. The first instance of the neural network block N1 produces a first instance of the intermediate tensor 826 based on the input 910 and the auxiliary information 812. This first instance of the intermediate tensor 826 is processed by the second instance 807 of the neural network block N1 with the auxiliary information 812, to generate a second instance of the intermediate tensor 825. The second instance of the intermediate tensor 825 is a refinement of the first instance of the intermediate tensor 826. The refinement occurring at the same level results in better representation before upsampling and processing in the consecutive layers.

This second instance of the intermediate tensor 825 is upsampled by the neural network block N2 on the second level 830 using auxiliary information 813 and producing an upsampled intermediate tensor 835. This is further upsampled by the neural network block N2 on the third level 840 using auxiliary information 814 and producing an upsampled intermediate tensor 845. At the first level 820 the spatial dimension of the intermediate tensors is (x, y), and second level 830 the spatial dimension is (2x, 2y) and at third level 840 the spatial dimension is (4x, 4y).

Neural network block of each level 820, 830, 840 also receives as input auxiliary information 812, 813, 814 respectively, wherein the auxiliary information is used in upsampling. Auxiliary information can define the weights to be used at a corresponding level. In addition, the auxiliary information can define which weights are re-used at a corresponding level. In addition, or instead, the auxiliary information can include a residual latent tensor that is learned for a specific level. In addition, or instead, the auxiliary information can include encoded relative positional information across levels after upsampling.

After the last level of the upsampling, the resulted intermediate tensor 845 is filtered 850 to obtain the reconstructed frame or the patch 860.

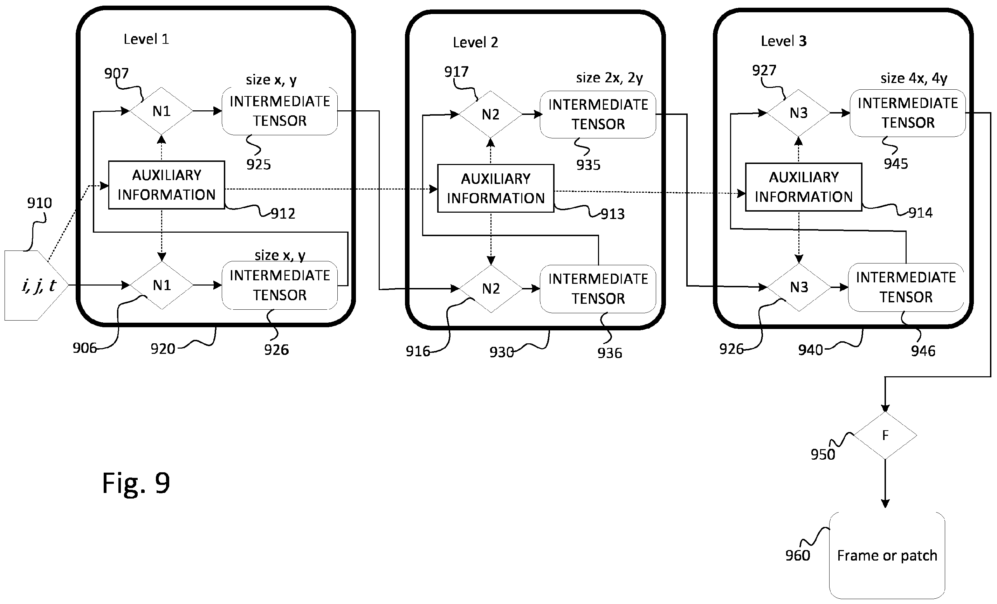

Figure 9 illustrates an example of recurrence using neural network blocks N1 at the first level 920, neural network blocks N2 at the second level 930, and neural network blocks N3 at the third level 940. This model is referred to as "model M4".

In the example of Figure 9, there is inter level recurrence within each level 920, 930, 940. The architectures of neural network blocks between different levels can be different. For example, the neural network block N1 can be convolutional and neural network block N2 can be MLP and neural network block N3 can again be convolutional.

Otherwise, the process follows the one of Figure 8. The frame (t) or a patch from the (i, j, t) 960 is reconstructed/generated by progressively up-sampling and processing the intermediate tensor 925, 935, 945. In this example, the frame or the patch is reconstructed in three levels 920, 930, 940.

The first instance 906 of the neural network block N1 on the first level 920 receives an input 910. The input 910 can be a latent tensor corresponding to the frame or the patch index, or the input 910 can be the frame or the patch itself. In addition to the input 910, the first instance 906 of the neural network block N1 receives auxiliary information 912. The first instance 906 of the neural network block N1 produces a first instance of the intermediate tensor 926 based on the input 910 and the auxiliary information 912. This intermediate tensor 926 is processed by the second instance 907 of the neural network block N1 with the auxiliary information 912, to generate a second instance of the intermediate tensor 925.

This second instance of the intermediate tensor 925 is upsampled by the first instance 916 of neural network block N2 on the second level 930 using auxiliary information 913 and producing a first instance of intermediate tensor 936. The first instance of the intermediate tensor 936 is processed by the second instance 917 of the neural network block N2 with the auxiliary information 913, to generate a second instance of the intermediate tensor 935.

The second instance of the intermediate tensor 935 is further upsampled by the first instance of the neural network block N3 926 on the third level 940 using auxiliary information 914 and producing a first instance of the intermediate tensor 946. The first instance of the intermediate tensor 946 is processed by the second instance 927 of the neural network block N3 927 with the auxiliary information 914, to generate a second instance of the intermediate tensor 945.

At the first level 920 the spatial dimension of the intermediate tensors is (x, y), and at the second level 930 the spatial dimension is (2x, 2y) and at third level 940 the spatial dimension is (4x, 4y).

Neural network block of each level 920, 930, 940 also receives as input auxiliary information 912, 913, 914 respectively, wherein the auxiliary information is used in upsampling. Auxiliary information can define the weights to be used at a corresponding level. In addition, the auxiliary information can define which weights are re-used at a corresponding level. In addition, or instead, the auxiliary information can include a residual latent tensor that is learned for a specific level. In addition, or instead, the auxiliary information can include encoded relative positional information across levels after upsampling.

After the last level of the upsampling, the resulted intermediate tensor 945 is filtered 950 to obtain the reconstructed frame or the patch 960.

In above, several examples of configurations for recursive neural architecture have been given. The examples being discussed comprise three levels. However, it is appreciated that the number of subsequent levels is not necessarily three, but can be at least one. When there is one level, the recursion occurs within said level as intra level recurrence. When there is more than one level, the recursion may occur between two or more levels and/or within one or more levels.

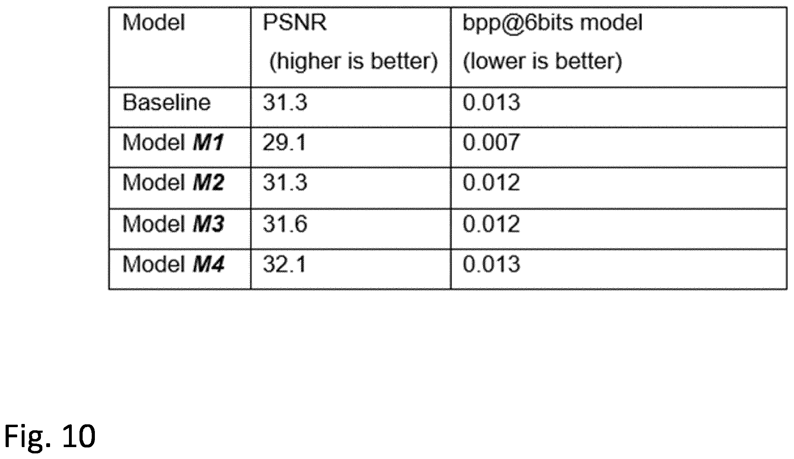

Figure 10 illustrates the results of different models with respect of PSNR (peak signal-to-noise ratio) and bpp (bits per pixel). In the table, the higher the PSNR is, the better the model. Also, the lower the bpp is, the better the model. In the table, Model M1 is the one shown in Figure 6, Model M2 is the one shown in Figure 7, Model M3 is the one shown in Figure 8, Model M4 is the one shown in Figure 9. From the table, it is evident, that the present solution improves/maintains the PSNR while reducing/maintaining the bpp with respect to the baseline model being based on the Hierarchical Encoding-based Neural Representation (HiNeRV) referred earlier.

The present solution is further discussed with reference to examples 1 - 3.

Example 1 "Memory efficient storage":

Example 1 addresses the storage of implicit neural representation models, such as models M1 - M4. Defining a light-weight memory efficient neural architecture for implicit neural representations is crucial in reducing the storage space requirements. Recursive neural architecture that shares weights over multiple spatial resolutions and abstractions reduces the number of model parameters. Auxiliary information is stored for various spatial resolutions to indicate which weights to be re-used at that level. Auxiliary information is also stored as a residual information for the level. The auxiliary information can be a vector of biases, specific to that level. The auxiliary information can also be learnt relative positional information inside the level for the intermediate tensor. The auxiliary information can also include a learnt representation for that level.

When some levels rely on a similar neural architecture but different weight values, those levels could be indicated by a flag, e.g., residual_flag. Once such residual_flag is set, there can be a base model weight and a weight update that indicates the weight could be built from a weight update. Such configuration may allow compressed representation for storage and delivery.

Example 2 "Global model representation and residual models":

In this example, the recursive blocks defined with respect to a global set of model weights are defined, where each recursive block weight is determined in terms of a weight update to the global set of model weights. A hash-table implementation may be used to map the input to the set of weight updates. This specific representation allows efficient compressed storage of INVR (Implicit Neural Visual Representation) models.

Example 3 "Memory efficient generation of the implicit multimedia content":

This example addresses the generation of multimedia content on memory constraint devices using the proposed approach. In a memory constraint situation, there may not be enough room for executing the unrolled computational graph at once. This could become a bottleneck in the decoder. Hence, a buffer is introduced on the decoder side to cache the intermediate information and at least one indicator about the existence of a complementary auxiliary information on the device. During execution, a counter will indicate which level of recursion is happening and the correct number of inputs for that level of recursion, e.g., auxiliary information buffer and the intermediate tensor buffer could be chosen. The implementation may be possible using at least one buffer for the intermediate buffer and the variables that indicate the dimensions of the intermediate tensor and the indicator that tells how the tensor is stored in the buffer, e.g., row-wise or collumn wise and the indictor for storing each feature channel in the memory.

The present embodiments have been discussed with reference to various technical implementations shown in Figures 6 - 9. According to an example, the method relating to these various technical implementations, comprises

- receiving data concerning a frame or a patch;
- generating an intermediate tensor based on the received data by a first instance of a neural network block;
- upsampling the intermediate tensor recursively by at least one second instance of a neural network block with auxiliary information;
- wherein at least two of said first instance and at least one second instances of the neural network blocks are recurrent; and
- wherein the resulted intermediate tensor represents the reconstructed frame or patch for a multimedia content.

According to another example, the apparatus relating to these various technical implementations, comprises means for

- receiving data concerning a frame or a patch;
- generating an intermediate tensor based on the received data by a first instance of a neural network block;
- upsampling the intermediate tensor recursively by at least one second instance of a neural network block with auxiliary information;
- wherein at least two of said first instance and at least one second instances of the neural network blocks are recurrent; and
- wherein the resulted intermediate tensor represents the reconstructed frame or patch for a multimedia content.

According to an embodiment complementing either of the previous examples, the recurrent neural network blocks appear on a same level.

According to an embodiment complementing either of the previous examples, the recurrent neural network blocks are on different subsequent levels.

According to an embodiment complementing either of the previous examples, each of said first instance and at least one second instance of the neural network blocks are on different subsequent levels.

According to an embodiment complementing either of the previous examples, and/or any of the previous embodiments, the number of subsequent levels is at least one.

According to an embodiment complementing either of the previous examples, and/or any of the previous embodiments, the auxiliary information comprises weights of the neural network block of the current level or the previous level.

According to an embodiment complementing either of the previous examples, and/or any of the previous embodiments, the auxiliary information comprises a residual latent tensor that is learned for a specific level. Alternatively, the learned residual may be generic to any specific level or being obtained from a generic neural video codec.

According to an embodiment complementing either of the previous examples, and/or any of the previous embodiments, the auxiliary information comprises encoded relative positional information across levels after upsampling, e.g., the coordinates of the patch in frame or time compared to a reference frame or patch.

According to an embodiment complementing either of the previous examples, and/or any of the previous embodiments, the received data comprises spatial information of a patch in a frame or the frame and/or temporal information of a patch in a frame or the frame, e.g., coordinates of the patch in frame or time.

According to an embodiment complementing either of the previous examples, and/or any of the previous embodiments, the upsampling is bilinear. Alternatively, the upsampling can be any of known techniques, e.g., bilinear, trilinear, and alike. Alternatively, the upsampling may follow a learning-based approach, that is, function defined as a neural network that maps an input to a bigger size, e.g., the output dimension is X times the input dimension, where X >= 1 from domain of real numbers.

According to an embodiment complementing either of the previous examples, and/or any of the previous embodiments, the neural network block is convolutional neural network or a multilayer perceptron algorithm or a combination of both.

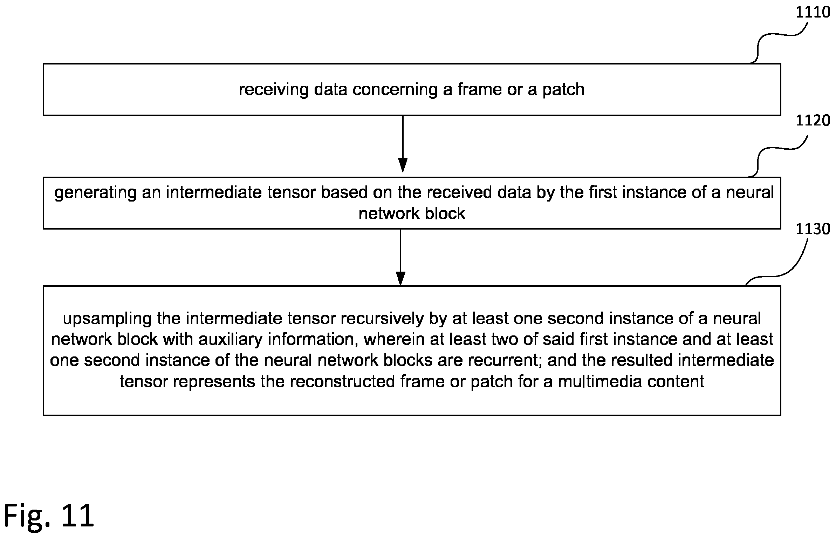

The method relating to the above example is shown in a flowchart of Figure 11. The method comprises receiving 1110 data concerning a frame or a patch; generating 1120 an intermediate tensor based on the received data by a first instance of a neural network block; and upsampling 1130 the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content. Each of the steps can be implemented by a respective module of a computer system.

An apparatus according to an embodiment comprises means for receiving data concerning a frame or a patch; means for generating an intermediate tensor based on the received data by a first instance of a neural network block; and means for upsampling the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content. The means comprises at least one processor, and a memory including a computer program code, wherein the processor may further comprise processor circuitry. The memory and the computer program code are configured to, with the at least one processor, cause the apparatus to perform the method of Figure 11 according to various embodiments.

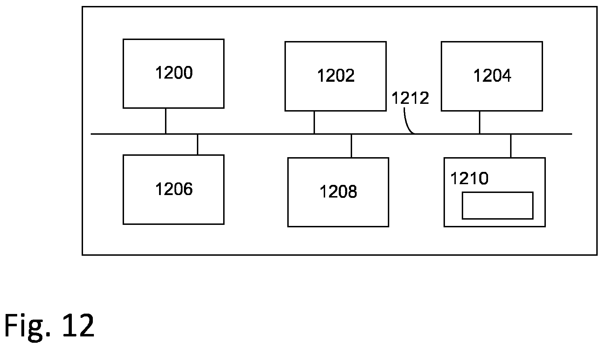

Figure 12 illustrates an apparatus according to an embodiment. The generalized structure of the apparatus will be explained in accordance with the functional blocks of the system. Several functionalities can be carried out with a single physical device, e.g., all calculation procedures can be performed in a single processor if desired. A data processing system of an apparatus according to an example of Figure 12 comprises a main processing unit 1200, a memory 1202, a storage device 1204, an input device 1206, an output device 1208, and a graphics subsystem 1210, which are all connected to each other via a data bus 1212.

The main processing unit 1200 is a processing unit arranged to process data within the data processing system. The main processing unit 1200 may comprise or be implemented as one or more processors or processor circuitry. The memory 1202, the storage device 1204, the input device 1206, and the output device 1208 may include other components as recognized by those skilled in the art. The memory 1202 and storage device 1204 store data in the data processing system 1200. Computer program code resides in the memory 1202 for implementing, for example, machine learning process. The input device 1206 inputs data into the system while the output device 1008 receives data from the data processing system and forwards the data, for example to a display. While data bus 1212 is shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone or an Internet access device, for example Internet tablet computer.

The main processing unit 1200 is configured to implement the method according to present embodiments.

The apparatus may also comprise other functional elements that are configured to complement the operations of the apparatus.

The various embodiments may provide advantages. For example, the present solution provides pure convolutional and easily trainable models. The architecture and decoding process focuses on reusing an implicit neural representation, which allows the compression of INR for generating multimedia content. One of the advantages of the architecture is using recurrent connections which makes it easy to train.

The proposed solution enhances the decoding time of the implicit neural representation and generation of the multimedia content, i.e., similar results compared to the baseline are obtained with more compressed architecture. The recursive architecture allows reducing the number of parameters and re-using the parameters allowing achieving similar or higher quality, e.g., in terms of PNSR, and improved resolution of generated content in comparison to conventional feed-forward architectures. The proposed solution improves the compression of INRs for multimedia content representation in specific 2D content. The proposed solution allows memory efficient decoding and generation of the multimedia content on the memory constraint devices by allowing parameter re-using, in contrast to existing solutions that require extensive memory.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

**Claims**

1. An apparatus comprising:

   means for receiving data concerning a frame or a patch;
   means for generating an intermediate tensor based on the received data by a first instance of a neural network block;
   means for upsampling the intermediate tensor recursively by at least one second instance of a neural network block with auxiliary information;
   wherein at least two of said first instance and at least one second instance of the neural network blocks are recurrent; and

wherein the resulted intermediate tensor represents the reconstructed frame or patch for a multimedia content.

2. The apparatus according to claim 1, wherein the recurrent neural network blocks appear on a same level.

3. The apparatus according to claim 1 or 2, wherein the recurrent neural network blocks are on different subsequent levels.

4. The apparatus according to claim 3, wherein each of said first instance and at least one second instance of the neural network blocks are on different subsequent levels.

5. The apparatus according to any of the claim 2 to 4, wherein the auxiliary information comprises at least one of the following: weights of the neural network block of a current level or previous level; a residual latent tensor that is learned for a specific level; encoded relative positional information across levels after upsampling.

6. The apparatus according to any of the claims 1 to 5, wherein the received data comprises spatial information and/or temporal information of a patch or a frame.

7. The apparatus according to any of the claims 1 to 6, wherein the upsampling is bilinear.

8. The apparatus according to any of the claims 1 to 7, wherein a neural network block is convolutional neural network or a multilayer perceptron algorithm.

9. A method comprising

receiving data concerning a frame or a patch; generating an intermediate tensor based on the received data by a first instance of a neural network block; upsampling the intermediate tensor recursively by at least one second instance of a neural network block with auxiliary information; wherein at least two of said first instance and at least one second instance of the neural network blocks are recurrent; and wherein the resulted intermediate tensor represents the reconstructed frame or patch for a multimedia content.

10. The method according to claim 9, wherein the recurrent neural network blocks appear on a same level.

11. The method according to claim 9 or 10, wherein the recurrent neural network blocks are on different subsequent levels.

12. The method according to claim 11, wherein each of said first instance and at least one second instance of the neural network blocks are on different subsequent levels.

13. The method according to claim 11, wherein the auxiliary information comprises one or more of the following: weights of the neural network block of the current level or the previous level; a residual latent tensor that is learned for a specific level; encoded relative positional information across levels after upsampling.

14. The method according to claim 11 or 12, wherein the received data comprises spatial information and/or temporal information of a patch or a frame.

15. The method according to any of the claims 9 to 14, wherein a neural network block is convolutional neural network or a multilayer perceptron algorithm.

Fig. 1

Fig. 2

Fig. 3

Fig. 4

Fig. 5

Fig. 6

EP 4 716 217 A1

Fig. 7

Fig. 8

Fig. 9

| Model | PSNR (higher is better) | bpp@6bits model (lower is better) |
|---|---|---|
| Baseline | 31.3 | 0.013 |
| Model *M1* | 29.1 | 0.007 |
| Model *M2* | 31.3 | 0.012 |
| Model *M3* | 31.6 | 0.012 |
| Model *M4* | 32.1 | 0.013 |

Fig. 10

1110

receiving data concerning a frame or a patch

1120

generating an intermediate tensor based on the received data by the first instance of a neural network block

1130

upsampling the intermediate tensor recursively by at least one second instance of a neural network block with auxiliary information, wherein at least two of said first instance and at least one second instance of the neural network blocks are recurrent; and the resulted intermediate tensor represents the reconstructed frame or patch for a multimedia content

Fig. 11

Fig. 12

Europäisches
Patentamt

European
Patent Office

Office européen
des brevets

# EUROPEAN SEARCH REPORT

Application Number

EP 25 19 7188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Kwan Ho Man ET AL: "HiNeRV: Video Compression with Hierarchical Encoding-based Neural Representation", , 26 January 2024 (2024-01-26), XP093313822, Retrieved from the Internet: URL:https://arxiv.org/pdf/2306.09818 * figure 2 * * sections 3, 3.1-3.4 * ----- | 1-15 | INV. H04N19/59 G06N3/044 G06T9/00 |
| X | YANG REN ET AL: "Learning for Video Compression With Recurrent Auto-Encoder and Recurrent Probability Model", IEEE JOURNAL OF SELECTED TOPICS IN SIGNAL PROCESSING, IEEE, US, vol. 15, no. 2, 9 December 2020 (2020-12-09), pages 388-401, XP011840033, ISSN: 1932-4553, DOI: 10.1109/JSTSP.2020.3043590 [retrieved on 2021-02-19] * figure 2 * * sections 3, 3.1-3.4 * ----- | 1-15 | |

TECHNICAL FIELDS
SEARCHED (IPC)

H04N
G06E
G06T
G06N

The present search report has been drawn up for all claims

| Place of search | Date of completion of the search | Examiner |
|---|---|---|
| The Hague | 30 January 2026 | Stoufs, Maryse |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ..........................................................................................
& : member of the same patent family, corresponding
   document

EPO FORM 1503 03.82 (P04C01)

2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HAO CHEN**. *NeRV: Neural Representations for Video*, 26 October 2021
- **HAO CHEN**. *HNeRV: A Hybrid Neural Representation for Videos*, June 2023
- **HO MAN KWAN et al.** *HiNeRV: Video Compression with Hierarchical Encoding-based Neural Representation*, 16 June 2023